# EUROPEAN PATENT APPLICATION

(11) **EP 4 170 933 A1**
(43) Date of publication of application: **26.04.2023**
(21) Application number: 21829946.9
(22) Date of filing: 24.06.2021
(51) Int. Cl.: H04B 10/2575

(54) **SIGNAL TRANSMISSION METHOD, SYSTEM, NETWORK DEVICE AND STORAGE MEDIUM**

(30) Priority: 24.06.2020 CN 202010590577
(71) Applicant: ZTE Corporation, Shenzhen, Guangdong 518057 (CN)
(72) Inventor: LI, Xinxin, Shenzhen, Guangdong 518057 (CN); YE, Yong, Shenzhen, Guangdong 518057 (CN); DING, Heng, Shenzhen, Guangdong 518057 (CN); WU, Jian, Shenzhen, Guangdong 518057 (CN); JIN, Hefei, Shenzhen, Guangdong 518057 (CN)
(74) Representative: Canzler & Bergmeier Patentanwälte Partnerschaft mbB
(86) International application number: PCT/CN2021/102054
(87) International publication number: WO 2021/259354

(57) **Abstract**

The present application provides a signal transmission method, a system, a network device and a storage medium. Said method comprises: modulating a predetermined digital signal into an analog signal within a predetermined frequency range; combining the modulated analog signal and a radio frequency signal to be transmitted, so as to obtain a combined analog signal; transmitting, by means of a signal transmitter, a corresponding optical signal obtained by performing electrical-to-optical conversion on the combined analog signal, and receiving, by means of a signal receiver, a corresponding analog signal obtained by performing optical-to-electrical conversion on the corresponding optical signal; extracting, from the converted analog signal, an analog signal and a radio frequency signal; and demodulating the extracted analog signal into a digital signal, so as to transmit the demodulated digital signal.

## Description

### CROSS-REFERENCE TO RELATED APPLICATIONS

The present disclosure claims the priority to the Chinese Patent Application No. 202010590577.8 filed with the CNIPA on June 24, 2020, the entire contents of which are incorporated herein by reference.

### TECHNICAL FIELD

The present disclosure relates to, but is not limited to, the technical field of communications.

### BACKGROUND

The Radio Over Fiber (ROF) technology is generally applied to reception and transmission of radio frequency signals in a communication system. Specifically, with the ROF technology, through electrical-optical conversion and optical-electrical conversion, the radio frequency signals can be converted into optical signals and then transmitted through an optical fiber. The application of the ROF technology can realize miniature size, low power consumption and flexible deployment of an Active Antenna Unit (AAU) device.

In a communication system based on the ROF technology, transmission of control signals of the AAU needs to be realized by a relatively complex device, and causes a relatively high cost of circuit development.

### SUMMARY

The present disclosure provides a signal transmission method, including: modulating a predetermined digital signal into an analog signal within a predetermined frequency range; combining the analog signal obtained by modulation and a radio frequency signal which needs to be transmitted to obtain a combined analog signal; transmitting a corresponding optical signal obtained through electrical-optical conversion of the combined analog signal by a signal transmitter, and receiving a corresponding analog signal obtained through optical-electrical conversion of the corresponding optical signal by a signal receiver; extracting an analog signal and a radio frequency signal from the analog signal obtained by the conversion; and demodulating the extracted analog signal into a digital signal for transmission of the digital signal obtained by demodulation.

The present disclosure provides a signal transmission system, including: a modulator configured to modulate a predetermined digital signal into an analog signal within a predetermined frequency range; a first combiner configured to combine the analog signal obtained by modulation with a radio frequency signal which needs to be transmitted, so as to obtain a combined analog signal; a signal transmitter configured to transmit a corresponding optical signal obtained through electrical-optical conversion of the combined analog signal; a signal receiver configured to receive a corresponding analog signal obtained through optical-electrical conversion of the corresponding optical signal; a second combiner configured to extract an analog signal and a radio frequency signal from the analog signal obtained by the conversion; and a demodulator configured to demodulate the extracted analog signal into a digital signal for transmission of the digital signal obtained by demodulation.

The present disclosure provides a network device, including: one or more processors; and a memory having stored thereon one or more programs which, when executed by the one or more processors, cause the one or more processors to carry out the signal transmission method described herein.

The present disclosure provides a storage medium storing a computer program thereon which, when executed by a processor, causes the processor to carry out the signal transmission method described herein.

### BRIEF DESCRIPTION OF DRAWINGS

FIG. 1 is a flowchart illustrating a signal transmission method according to the present disclosure.
FIG. 2 is a schematic structural diagram of a signal transmission system according to the present disclosure.
FIG. 3 is a detailed schematic structural diagram of the signal transmission system according to the present disclosure.
FIG. 4 is a schematic diagram illustrating an operating principle of a modulator shown in FIG. 3.
FIG. 5 is a schematic diagram illustrating an operating principle of converting a plurality of analog signals into an optical signal in the signal transmission system shown in FIG. 3.
FIG. 6 is a schematic diagram illustrating an operating principle of converting an optical signal into a plurality of analog signals in the signal transmission system shown in FIG. 3.
FIG. 7 is a schematic structural diagram of a transmission link of a communication system according to the present disclosure.
FIG. 8 is a flowchart illustrating a signal transmission method applied to the transmission link of the communication system show in FIG. 7.
FIG. 9 is a schematic structural diagram of a receiving link of a communication system according to the present disclosure.
FIG. 10 is a flowchart illustrating a signal transmission method applied to the receiving link of the communication system shown in FIG. 9.
FIG. 11 is a schematic diagram illustrating exemplary hardware architecture of a computing device capable of implementing the signal transmission method according to the present disclosure.

### DETAIL DESCRIPTION OF EMBODIMENTS

In order to make the objectives, technical solutions and advantages of the present disclosure clearer, the implementations of the present disclosure are described in detail below with reference to the drawings. It should be noted that the implementations described herein and the features therein can be arbitrarily combined with one another if no conflict is incurred.

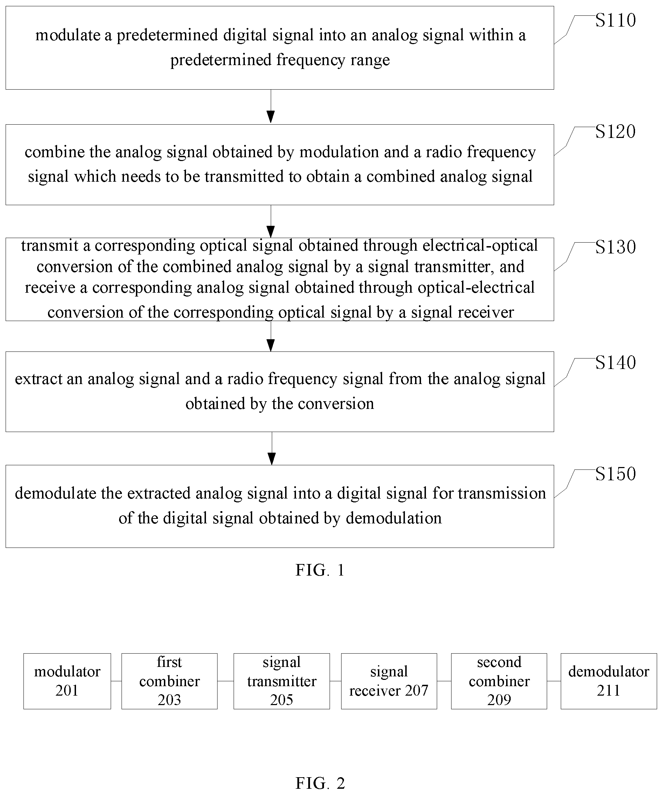

FIG. 1 is a flowchart illustrating a signal transmission method according to the present disclosure. As shown in FIG. 1, the signal transmission method of the present disclosure may include the following operations S110 to S150.

In operation S 110, a predetermined digital signal is modulated into an analog signal within a predetermined frequency range.

In the implementations of the present disclosure, the predetermined digital signal may be a control signal, and may be converted into the analog signal within the predetermined frequency range by a modulator.

In the description of the following implementations of the present disclosure, the analog signal within the predetermined frequency range may be a radio wave signal having a frequency band from 30KHz to 300KHz. For convenience of description, the analog signal within the predetermined frequency range may be referred to as a low frequency analog signal. In some implementations, the predetermined frequency range may be set according to an actual application scenario, which is not specifically limited in the present disclosure.

In operation S120, the analog signal obtained by modulation and a radio frequency signal which needs to be transmitted are combined to obtain a combined analog signal.

In this operation, the analog signal obtained by conversion and the radio frequency signal which needs to be transmitted may be combined by a combiner to obtain the combined analog signal.

In operation S130, a corresponding optical signal obtained through electrical-optical conversion of the combined analog signal is transmitted by a signal transmitter, and a corresponding analog signal obtained through optical-electrical conversion of the corresponding optical signal is received by a signal receiver.

In this operation, the combined analog signal may be converted into the corresponding optical signal by a first ROF module by the ROF technology, and the optical signal obtained by the first ROF module may be converted into the corresponding analog signal by a second ROF module.

In operation S140, an analog signal and a radio frequency signal are extracted from the analog signal obtained by the conversion.

In this operation, the analog signal and the radio frequency signal may be extracted out after the analog signal output by the second ROF module is processed by a filter combiner.

In operation S150, the extracted analog signal is demodulated into a digital signal for transmission of the digital signal obtained by demodulation.

In this operation, the extracted analog signal may be demodulated into the digital signal by a demodulator, and transmission of a control signal may be realized after the digital signal is processed by a Field Programmable Gate Array (FPGA).

According to the signal transmission method of the present disclosure, after the digital signal is converted into the analog signal, the analog signal obtained by the conversion and the radio frequency signal which needs to be transmitted are combined, the radio frequency signal and the analog signal are respectively extracted out after the signal obtained by the combination are subjected to the optical-electrical conversion and the electrical-optical conversion, and then the extracted analog signal is demodulated into the digital signal by the demodulator, thereby realizing transmission of a digital-analog mixed signal through simple devices and producing effects of simplifying circuits and reducing a design cost.

In an implementation, the operation S120 may include: operation S121, performing first filtering processing on the analog signal obtained by the modulation and the radio frequency signal which needs to be transmitted; and operation S122, performing combination processing on the filtered analog signal and the filtered radio frequency signal to obtain the combined analog signal.

In this implementation, the first filtering processing is configured to realize harmonic filtering, and interference signals may be filtered out from the analog signal and the radio frequency signal through the first filtering processing.

In an implementation, the operation S150 may include: operation S151, performing second filtering processing on the extracted analog signal; and operation S152, demodulating the analog signal subjected to the second filtering processing into the digital signal.

In this implementation, the second filtering processing is configured to realize harmonic filtering and eliminate intermodulation interference, and harmonic components of the radio frequency signal and the analog signal are reduced by filtering the radio frequency signal and the analog signal by a second filter.

In an implementation, in a signal transmission system for a receiving channel, a clock generator may generate two clock signals: a first clock signal and a second clock signal, the first clock signal may be used by the modulator as a carrier of a digital signal, the second clock signal may be used by a clock system as a reference clock, and the first clock signal and the second clock signal are different in frequency.

In this implementation, the operation S110 may include: modulating the digital signal into the analog signal within the predetermined frequency range using the first clock signal, which is a carrier signal generated in advance for signal modulation.

In an implementation, if the predetermined digital signal is a digital signal of a transmission channel, each of the combined analog signal and the signals extracted from the analog signal obtained by the conversion includes the second clock signal.

In this implementation, the operation S120 may include: combining a second clock signal generated in advance, the analog signal obtained by the modulation and the radio frequency signal which needs to be transmitted to obtain the combined analog signal, with the second clock signal and the first clock signal being clock signals generated by a same clock generator and having different frequencies.

In this implementation, the operation S140 may include: extracting the second clock signal, the analog signal, and the radio frequency signal from the analog signal obtained by the conversion.

In the implementation of the present disclosure, if the digital signal is the digital signal of the transmission channel, after being transmitted through the first ROF module at a signal transmitting end and the second ROF module at a signal receiver, the second clock signal generated by the clock generator is used for up conversion processing of the extracted radio frequency signal.

In this implementation, after extracting the second clock signal, the analog signal, and the radio frequency signal from the analog signal obtained by the conversion in the operation S140, the signal transmission method may further include: operation S160, mixing the extracted second clock signal and the extracted radio frequency signal to perform the up conversion processing on the extracted radio frequency signal, so as to obtain a corresponding radio signal; operation S161, performing signal amplification processing on the radio signal; and operation S162, transmitting the radio signal subjected to the signal amplification processing.

In this implementation, in a signal transmission system for the transmission channel, the radio frequency signal and the clock signal are mixed by a mixer to realize the up conversion, so as to generate the radio signal such as a millimeter wave signal, and the millimeter wave signal is amplified by an amplifier and then radiated by an antenna, thereby realizing transmission of the radio signal.

In an implementation, the extracted second clock signal and the extracted radio frequency signal need to be subjected to filtering processing before performing the up conversion processing on the extracted radio frequency signal. In this implementation, the operation S160 may include: operation S1601, performing the second filtering processing on the extracted second clock signal and the extracted radio frequency signal; and operation S1602, mixing the second clock signal subjected to the second filtering processing and the radio frequency signal subjected to the second filtering processing to obtain the corresponding radio signal.

If the predetermined digital signal is a digital signal of the receiving channel, before the operation S 110, the signal transmission method further includes: operation S11, performing signal amplification processing on a radio signal received through the antenna to obtain the radio signal subjected to the signal amplification processing; and operation S12, mixing the radio signal subjected to the signal amplification processing and the second clock signal generated in advance to perform down conversion processing on the radio signal subjected to the signal amplification processing, so as to obtain the radio frequency signal which needs to be transmitted.

In this implementation, in the signal transmission system for the receiving channel, the radio signal such as the millimeter wave signal and the clock signal are mixed by the mixer to realize the down conversion, thereby generating the radio frequency signal.

In an implementation, if the predetermined digital signal is the digital signal of the receiving channel, after the operation S140, the signal transmission method further includes: operation S170, performing second filtering processing on the extracted radio frequency signal; and operation S171, performing digital sampling on the radio frequency signal subjected to the second filtering processing to obtain the digitally sampled radio frequency signal.

In an implementation, if the predetermined digital signal is the digital signal of the receiving channel, after the operation S150, the signal transmission method further includes: operation S180, performing logical processing on the digital signal obtained by the demodulation to obtain the logically processed digital signal.

In this implementation, an Analog To Digital Converter (ADC) may be used to performing digital processing on the radio frequency signal obtained by the down conversion processing, and the radio frequency signal obtained by the down conversion processing is sampled by the ADC to implement transmission of the radio frequency signal.

In an implementation, if the predetermined digital signal is the digital signal of the receiving channel, after the operation S150, the signal transmission method further includes: operation S 190, performing logical processing on the digital signal obtained by the demodulation by an FPGA chip to obtain the logically processed digital signal.

In this implementation, in the signal transmission system for the receiving channel, the analog signal is demodulated by the demodulator to generate the digital signal, and the digital signal is processed by the FPGA to realize the transmission of the control signal.

According to the signal transmission method of the present disclosure, after the digital signal is converted into the analog signal within the preset frequency range, the analog signal and the radio frequency signal which needs to be transmitted are combined and transmitted together in the ROF module and then through the optical fiber, the optical signal is converted by the ROF module into the corresponding radio frequency signal and the corresponding analog signal, the radio frequency signal and the analog signal are respectively extracted out by the combiner and the filter, and the extracted analog signal is demodulated into the digital signal by the demodulator, thereby realizing the transmission of the digital-analog mixed signal and producing the effects of simplifying the circuits and reducing the design cost.

A signal transmission system according to the present disclosure is described in detail below with reference to the drawings. FIG. 2 is a schematic structural diagram of the signal transmission system according to the present disclosure. As shown in FIG. 2, the signal transmission system may include the following modules and devices.

A modulator 201 is configured to modulate a predetermined digital signal into an analog signal within a predetermined frequency range.

A first combiner 203 is configured to combine the analog signal obtained by modulation with a radio frequency signal which needs to be transmitted, so as to obtain a combined analog signal.

A signal transmitter 205 is configured to transmit a corresponding optical signal obtained through electrical-optical conversion of the combined analog signal.

A signal receiver 207 is configured to receive a corresponding analog signal obtained through optical-electrical conversion of the corresponding optical signal.

A second combiner 209 is configured to extract an analog signal and a radio frequency signal from the analog signal obtained by the conversion.

A demodulator 211 is configured to demodulate the extracted analog signal into a digital signal for transmission of the digital signal obtained by demodulation.

According to the signal transmission system of the present disclosure, the digital signal is converted by the modulator into the analog signal within the predetermined frequency range, the analog signal obtained by the modulation and the radio frequency signal which needs to be transmitted are combined by the combiner and transmitted together in an ROF module and then through an optical fiber, the optical signal is converted by an ROF module into the corresponding radio frequency signal and the corresponding analog signal, the radio frequency signal and the analog signal are respectively extracted out by the combiner and a filter, and the extracted analog signal is demodulated into the digital signal by the demodulator, thereby realizing the transmission of the digital-analog mixed signal and producing the effects of simplifying the circuits and reducing the design cost.

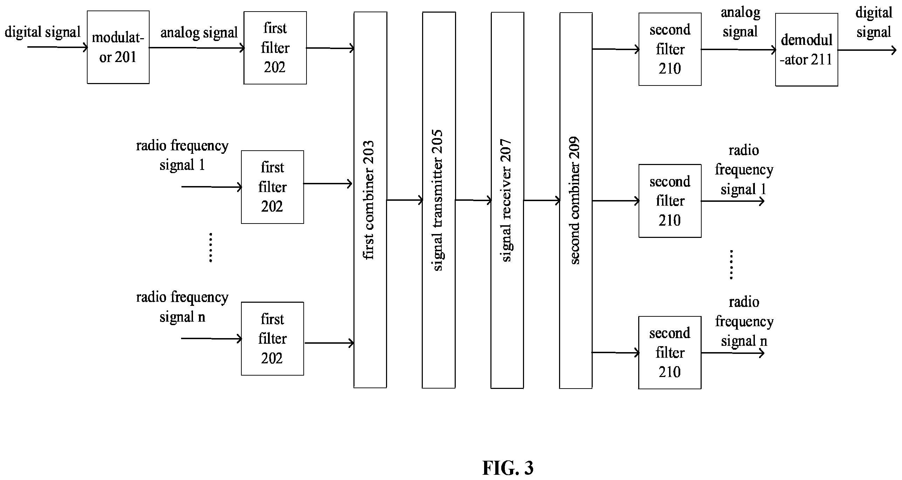

FIG. 3 is a detailed schematic structural diagram of the signal transmission system according to the present disclosure, and the same or equivalent structures shown in FIG. 3 and FIG. 2 are denoted by the same reference numerals. The signal transmission system of the present disclosure is described below with reference to FIG. 3.

As shown in FIG. 3, the signal transmission system may include: the modulator 201, a first filter 202, the first combiner 203, the signal transmitter 205, the signal receiver 207, the second combiner 209, a second filter 210, and the demodulator 211. However, the present disclosure is not limited to the above structures or the particular modules and devices shown in FIG. 3. In some implementations, the signal transmission system may include some of the modules and the devices, that is, the signal transmission system may have more flexible configuration of the modules, which is described below in connection with implementations.

In an implementation, the modulator 201 is configured to convert the predetermined digital signal into the analog signal within the predetermined frequency range by the modulation; the first filter 202 is configured to perform first filtering processing on the analog signal obtained by the modulation and the radio frequency signal which needs to be transmitted; the first combiner 203 is configured to combine the filtered analog signal and the filtered radio frequency signal to obtain the combined analog signal; the signal transmitter 205 is configured to transmit the corresponding optical signal obtained through the electrical-optical conversion of the combined analog signal; the signal receiver 207 is configured to receive the corresponding analog signal obtained through the optical-electrical conversion of the corresponding optical signal; the second combiner 209 is configured to extract the analog signal and the radio frequency signal from the corresponding analog signal obtained by the conversion; the second filter 210 is configured to perform second filtering processing on the extracted analog signal and the extracted radio frequency signal; and the demodulator 211 is configured to demodulate the analog signal subjected to the second filtering processing into the digital signal.

In the present disclosure, the combined analog signal may be converted into the corresponding optical signal by a first ROF module using the ROF technology, and the optical signal obtained by the first ROF module may be converted into the corresponding analog signal by a second ROF module.

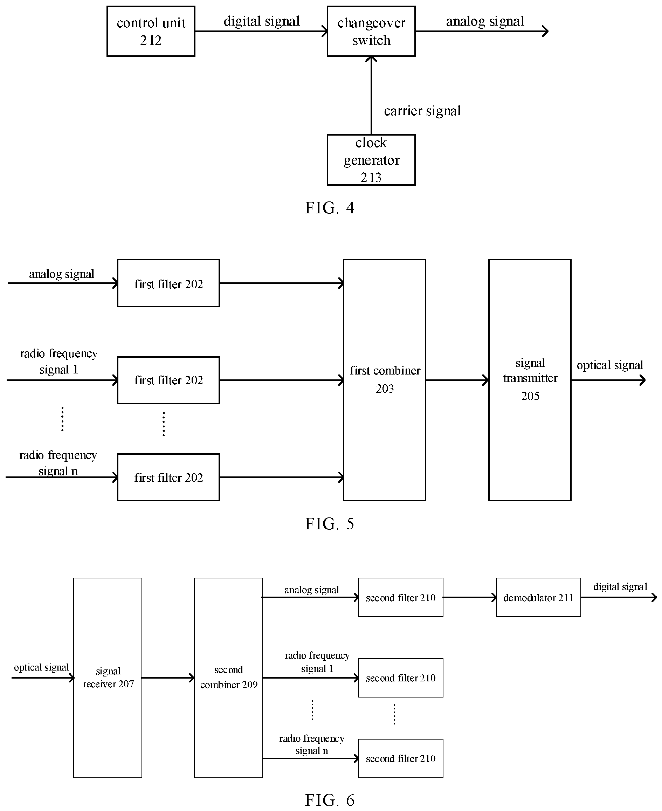

FIG. 4 is a schematic diagram illustrating an operating principle of the modulator shown in FIG. 3. As shown in FIG. 4, the signal transmission system may further include: a first control unit 212 and a clock generator 213.

The first control unit 212 is configured to generate a control signal for a communication system, and the control signal is generally generated by an FPGA chip or a signal processor; and the clock generator 213 is configured to generate a first clock signal, which is a carrier signal for signal modulation, and the modulator is configured to modulate the digital signal into the analog signal within the predetermined frequency range using the generated first clock signal.

In FIG. 4, the clock generator 213 may be configured to generate the carrier signal (i.e., the first clock signal) for the signal modulation. The modulator 201 may be implemented as a changeover switch. The modulator 201 receives the digital signal and the carrier signal for the signal modulation, and the digital signal is modulated into the carrier signal through control of the changeover switch by the digital signal, so as to be transmitted by an ROF system.

As can be seen from the operating principle of the modulator illustrated by FIG. 4, the modulator converts the digital signal into the analog signal within the predetermined frequency range in the signal transmission system, so that the analog signal obtained by the modulation may be transmitted together with the existing radio frequency signal.

FIG. 5 is a schematic diagram illustrating an operating principle of converting a plurality of analog signals into an optical signal in the signal transmission system shown in FIG. 3. As can be seen from FIG. 5, the first filters 202 may be configured to filter out a frequency component except an analog signal when filtering the analog signal, may be configured to filter out a frequency component except a radio frequency signal 2 when filtering the radio frequency signal 2 ... and may be configured to filter out a frequency component except a radio frequency signal n when filtering the radio frequency signal n.

In some implementations, the first filters 202 may be implemented as different filters, such as the filter 2021 (not shown), the filter 2022 (not shown) ... and the filter 202n (not shown), with n being an integer greater than or equal to 1. Illustratively, the filter 2021 may be configured to filter out the frequency component except the analog signal; the filter 2022 may be configured to filter the radio frequency signal 1 so as to filter out the frequency component except the radio frequency signal 1 ... and the filter 202(n+1) may be configured to filter the radio frequency signal n so as to filter out the frequency component except the radio frequency signal n.

The first combiner 203, i.e., a filter combiner, may be configured to combine the low frequency signal with the radio frequency signal 1 to the radio frequency signal n, and has a suppression effect on signals with other frequency bands; and the signal transmitter 205 is configured to transmit the optical signal obtained through conversion of the analog signals, so that the optical signal may be transmitted through the optical fiber.

As can be seen from the operating principle of converting the plurality of analog signals into the optical signal illustrated by FIG. 5, after the analog signal output by the modulator is filtered and the existing radio frequency signals are filtered, the filtered analog signal and the filtered radio frequency signals are combined and transmitted together in the first ROF module, so that the combined analog signal is converted into the optical signal and the optical signal is transmitted through the optical fiber.

FIG. 6 is a schematic diagram illustrating an operating principle of converting an optical signal into a plurality of analog signals in the signal transmission system shown in FIG. 3.

As shown in FIG. 6, the signal receiver 207 may be configured to receive the corresponding optical signal transmitted through the optical fiber, and perform the optical-electrical conversion to obtain the corresponding analog signal; and the second combiner 209 is configured to extract the analog signal and the radio frequency signals from the analog signal obtained by the conversion. Illustratively, the second combiner 209 may be a filter combiner.

The second filters 210 are configured to filter the analog signal and each of the radio frequency signals output by the second combiner 209. When the analog signal is filtered, the second filter 210 may be configured to filter out harmonic and intermodulation components generated by the signal transmitter 205 and the signal receiver 207 from the analog signal; and when each of the radio frequency signals is filtered, the second filter 210 may be configured to filter out harmonic and intermodulation components generated by the signal transmitter 205 and the signal receiver 207 from each of the radio frequency signals.

In an implementation, the second filters 210 may be implemented as different filters, such as the low-pass filter 2101 (not shown), the filter 2102 (not shown) ... the filter 210n (not shown), with n being an integer greater than or equal to 1. In the implementations of the present disclosure, the filter configured to filter the analog signal may be the low-pass filter.

Illustratively, the filter 2101 may be configured to filter out the harmonic and intermodulation components generated by the signal transmitter 205 and the signal receiver 207 from the extracted analog signal; the filter 2102 may be configured to filter out the harmonic and intermodulation components generated by the signal transmitter 205 and the signal receiver 207 from the radio frequency signal 1 ... and the filter 210(n+1) may be configured to filter out the harmonic and intermodulation components generated by the signal transmitter 205 and the signal receiver 207 from the radio frequency signal n.

The demodulator 211 is configured to demodulate the analog signal filtered by the second filter 210 into the digital signal.

As can be seen from the operating principle of converting the optical signal into the plurality of analog signals illustrated by FIG. 6, after the combined analog signal is converted into the optical signal and the optical signal is transmitted through the optical fiber, the optical signal is converted into the corresponding radio frequency signals and the corresponding analog signal by the ROF module, the radio frequency signals and the analog signal are respectively extracted through the combiner and the filters, and then the extracted analog signal is demodulated into the digital signal by demodulator, thereby realizing the transmission of the digital-analog mixed signal and producing an effect of reducing a system design cost.

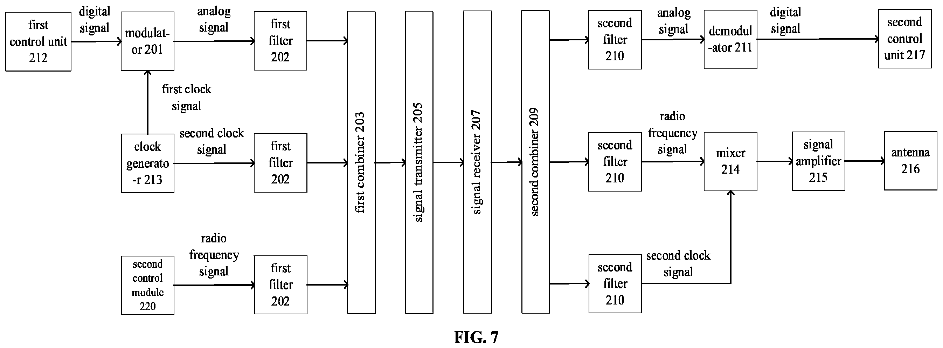

FIG. 7 is a schematic structural diagram of a transmission link of a communication system according to the present disclosure, and the same or equivalent structures shown in FIG. 7, FIG. 2, FIG. 3 and FIG. 4 are denoted by the same reference numerals.

In transmission of the radio frequency signal by the signal transmission system shown in FIG. 7, the clock generator 213 is further configured to generate a second clock signal, and the second clock signal and the first clock signal are the clock signals having different frequencies and generated by the same clock generator; the first combiner 203 is further configured to combine the second clock signal generated in advance, the analog signal obtained by the modulation, and the radio frequency signal which needs to be transmitted, so as to obtain the combined analog signal; the second combiner 209 is further configured to extract the second clock signal, the analog signal, and the radio frequency signal from the analog signal obtained by the conversion; the second filters 210 are configured to perform first filtering processing on the second clock signal, the analog signal obtained by the modulation, and the radio frequency signal which needs to be transmitted; and the first combiner 203 is further configured to combine the second clock signal, the analog signal, and the radio frequency signal which are subjected to the first filtering processing, so as to obtain the combined analog signal.

Still with reference to FIG. 7, in an implementation, a mixer 214 is configured to mix the extracted second clock signal and the extracted radio frequency signal to perform up conversion processing on the extracted radio frequency signal, so as to obtain a corresponding radio signal; a signal amplifier 215 is configured to perform signal amplification processing on the radio signal; and an antenna 216 is configured to transmit the radio signal subjected to the signal amplification processing.

In an implementation, in the transmission of the radio frequency signal by the signal transmission system, the second filters 210 are configured to perform second filtering processing on the extracted second clock signal and the extracted radio frequency signal; and the mixer 214 is further configured to mix the second clock signal and the radio frequency signal which are subjected to the second filtering processing, so as to obtain the corresponding radio signal.

In an implementation, a second control unit 217 is configured to process signals of the communication system such as a transmit-receive switching signal and a beam control signal, and may be, for example, a single chip microcomputer or an FPGA. A second control module 220 is configured to convert a digital signal in the communication system into an analog signal, and may be implemented as a digital-to-analog converter (DAC).

As can be seen from the description of FIG. 7, in the transmission link of the communication system, after the digital signal generated by the control unit is converted into an analog signal with a specified frequency, the analog signal with the specified frequency and the radio frequency signal which needs to be transmitted are combined to generate the combined signal to be transmitted in the ROF module, thereby realizing the transmission of the digital-analog mixed signal and producing the effects of simplifying the circuits and reducing the design cost.

It should be noted that the present disclosure is not limited to the particular configuration and processing described above and illustrated by the drawings. For the purposes of convenient description and conciseness, detailed descriptions of the other modules and devices are omitted herein. Reference may be made to the corresponding processes in the relevant contents of the above method for specific operating processes of the systems, modules and units described above, and the specific operating processes will not be repeated here.

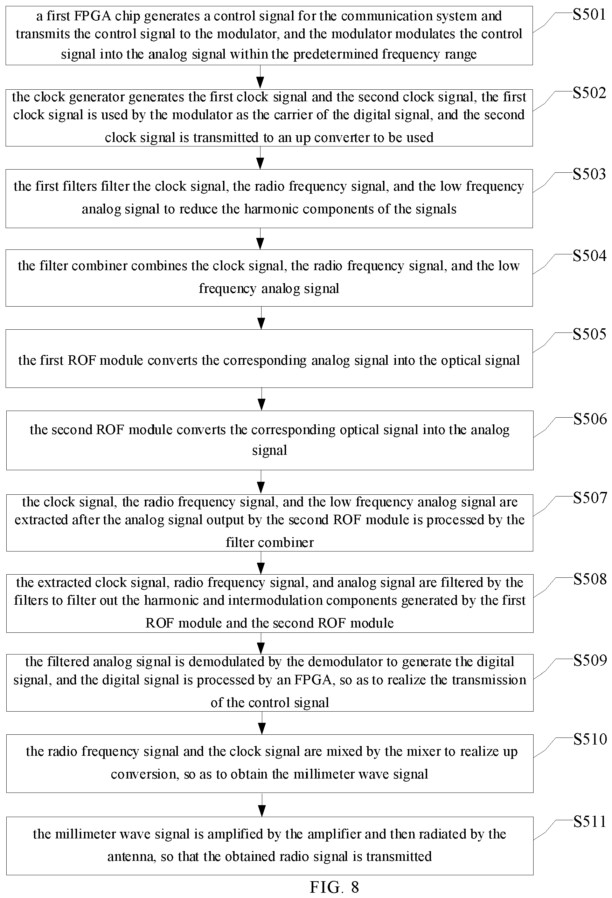

FIG. 8 is a flowchart illustrating a signal transmission method applied to the transmission link of the communication system show in FIG. 7. As shown in FIG. 8, the signal transmission method may include the following operations S501 to S511.

In operation S501, a first FPGA chip (e.g., the first control unit 212 shown in FIG. 7) generates a control signal for the communication system and transmits the control signal to the modulator, and the modulator modulates the control signal into the analog signal within the predetermined frequency range.

In operation S502, the clock generator generates the first clock signal and the second clock signal, the first clock signal is used by the modulator as the carrier of the digital signal, and the second clock signal is transmitted to an up converter to be used.

In the operations S501 and S502, the modulator is implemented as a quick changeover switch, the digital signal generated by the FPGA chip is used as a control signal for the changeover switch, and the clock signal generated by the clock generator is used as the carrier signal for the changeover switch.

In operation S503, the first filters filter the clock signal, the radio frequency signal, and the analog signal to reduce the harmonic components of the signals.

In operation S504, the filter combiner combines the filtered clock signal, the filtered radio frequency signal, and the filtered analog signal.

In this operation, the filter combiner has a suppression effect on spectral components except the clock signal, the radio frequency signal, and the analog signal, thereby reducing the interference signals which enter the combiner.

In operation S505, the first ROF module converts the combined analog signal into the optical signal.

In this operation, the optical signal obtained by the electrical-optical conversion may be transmitted by the signal transmitter, so as to realize the conversion from the analog signal into the optical signal, thereby realizing the transmission of the signal in the optical fiber.

In operation S506, the second ROF module converts the corresponding optical signal into the analog signal.

In this operation, the analog signal obtained by the optical-electrical conversion may be received by the signal receiver, so as to realize the conversion from the optical signal into the analog signal.

In operation S507, the clock signal, the radio frequency signal, and the analog signal are extracted after the analog signal output by the second ROF module is processed by the filter combiner.

In operation S508, the extracted clock signal, radio frequency signal, and analog signal are filtered by the filters to filter out the harmonic and intermodulation components generated by the first ROF module and the second ROF module.

In operation S509, the filtered analog signal is demodulated by the demodulator to generate the digital signal, and the digital signal is processed by an FPGA (e.g., the second control unit 217 shown in FIG. 7), so as to realize the transmission of the control signal.

In operation S510, the radio frequency signal and the clock signal are mixed by the mixer to realize up conversion, so as to obtain the millimeter wave signal.

In operation S511, the millimeter wave signal is amplified by the amplifier and then radiated by the antenna, so that the obtained radio signal is transmitted.

Through the above operations S501 to S511, in the transmission link of the communication system, the digital signal is first converted into the analog signal, and the analog signal and the existing radio frequency signal are then transmitted together, which has the characteristics of simple implementation, reliable and effective circuits, low cost, and high practical value.

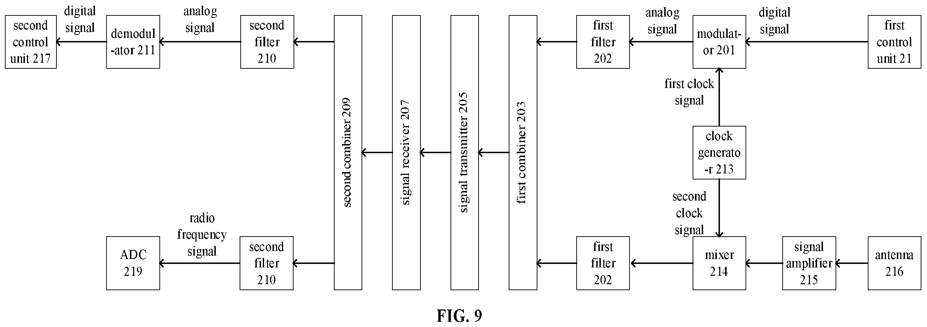

FIG. 9 is a schematic structural diagram of a receiving link of a communication system according to the present disclosure, and the same or equivalent structures shown in FIG. 9, FIG. 2, FIG. 3 and FIG. 4 are denoted by the same reference numerals.

In FIG. 9, if the predetermined digital signal is a digital signal of a receiving channel, the signal transmission system may receive the radio signal such as a millimeter wave radio signal through the antenna 216.

In an implementation, the signal transmission system further includes: the signal amplifier 215 configured to perform the signal amplification processing on the radio signal received through the antenna, so as to obtain the radio signal subjected to the signal amplification processing; and the mixer 214 configured to mix the radio signal subjected to the signal amplification processing with the second clock signal generated in advance to perform down conversion processing on the radio signal subjected to the signal amplification processing, so as to obtain the radio frequency signal which needs to be transmitted.

In an implementation, the signal transmission system further includes: the second filter 210 configured to perform second filtering processing on the extracted radio frequency signal; and an analog-to-digital converter 219 configured to perform digital sampling on the radio frequency signal subjected to the second filtering processing, so as to obtain the digitally sampled radio frequency signal.

In the receiving link of the communication system, by using the modulator, the combiner and the demodulator in the communication system based on the ROF technology, the digital signal is converted into the analog signal within the predetermined frequency range, and the analog signal and the existing radio frequency signal are then transmitted together, which has the characteristics of simple implementation, reliable and effective circuits, low cost, and high practical value.

It should be noted that the present disclosure is not limited to the particular configuration and processing described above and illustrated by the drawings. For the purposes of convenient description and conciseness, detailed descriptions of the other modules and devices are omitted herein. Reference may be made to the corresponding processes in the relevant contents of the above method for specific operating processes of the systems, modules and units described above, and the specific operating processes will not be repeated here.

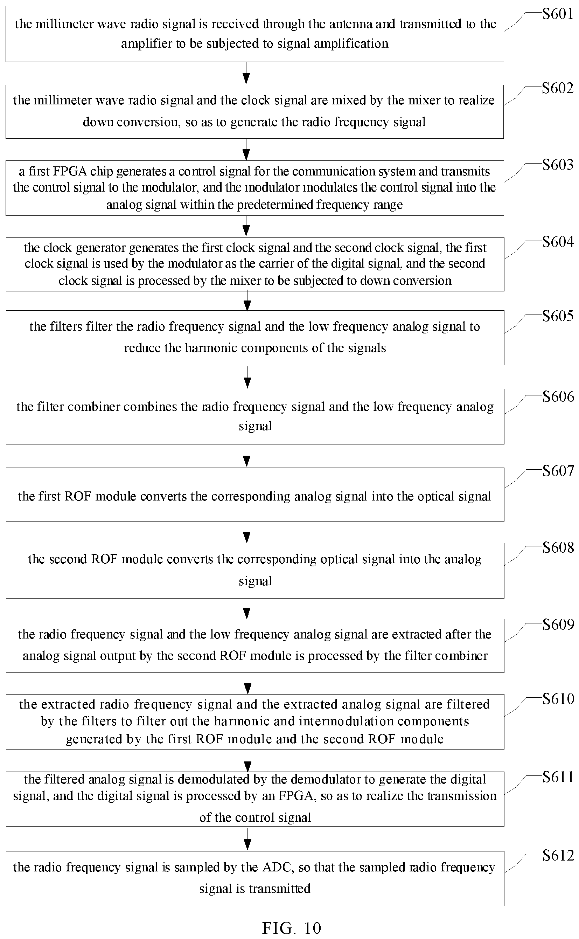

FIG. 10 is a flowchart illustrating a signal transmission method applied to the receiving link of the communication system shown in FIG. 9. As shown in FIG. 10, the signal transmission method may include the following operations S601 to S612.

In operation S601, the millimeter wave radio signal is received through the antenna and transmitted to the amplifier to be subjected to signal amplification.

In operation S602, the millimeter wave radio signal and the clock signal are mixed by the mixer to realize down conversion, so as to generate the radio frequency signal.

In operation S603, a first FPGA chip (e.g., the first control unit 212 shown in FIG. 9) generates a control signal for the communication system and transmits the control signal to the modulator, and the modulator modulates the control signal into the analog signal within the predetermined frequency range.

In operation S604, the clock generator generates the first clock signal and the second clock signal, the first clock signal is used by the modulator as the carrier of the digital signal, and the second clock signal is processed by the mixer to be subjected to down conversion.

In this implementation, the modulator is implemented as a quick changeover switch, the digital signal generated by the FPGA chip is used as a control signal for the changeover switch, and the clock signal generated by the clock generator is used as the carrier signal for the changeover switch.

In operation S605, the filters filter the radio frequency signal and the analog signal to reduce the harmonic components of the signals.

In operation S606, the filter combiner combines the radio frequency signal and the analog signal.

In this operation, the filter combiner has a suppression effect on spectral components except the radio frequency signal and the analog signals, thereby reducing the interference signals which enter the combiner.

In operation S607, the first ROF module converts the corresponding analog signal into the optical signal.

In this operation, the optical signal obtained by the electrical-optical conversion may be transmitted by the signal transmitter, so as to realize the conversion from the analog signal into the optical signal, thereby realizing the transmission of the signal in the optical fiber.

In this operation, the conversion from the analog signal into the optical signal is realized, thereby realizing the transmission of the signal in the optical fiber.

In operation S608, the second ROF module converts the corresponding optical signal into the analog signal.

In this operation, the analog signal obtained by the optical-electrical conversion may be received by the signal receiver.

In this operation, the conversion from the optical signal into the analog signal is realized.

In operation S609, the radio frequency signal and the analog signal are extracted after the analog signal output by the second ROF module is processed by the filter combiner.

In operation S610, the extracted radio frequency signal and the extracted analog signal are filtered by the filters to filter out the harmonic and intermodulation components generated by the first ROF module and the second ROF module.

In operation S611, the filtered analog signal is demodulated by the demodulator to generate the digital signal, and the digital signal is processed by an FPGA (e.g., the second control unit 217 shown in FIG. 9), so as to realize the transmission of the control signal.

In operation S612, the radio frequency signal is sampled by the ADC, so that the sampled radio frequency signal is transmitted.

Through the above operations S601 to S612, in the receiving link of the communication system, by using the modulator, the combiner, and the demodulator in the communication system based on the ROF technology, the digital signal is converted into the analog signal, and the analog signal is then transmitted together with the existing radio frequency signal.

The signal transmission method and the signal transmission system according to the implementations of the present disclosure are great supplement and improvement to the application of the ROF technology, and have the characteristics of simple implementation, reliable and effective circuits, low cost, and high practical value.

It should be noted that the present disclosure is not limited to the particular configuration and processing described above and illustrated by the drawings. For the purposes of convenient description and conciseness, detailed descriptions of well-known methods are omitted herein. Reference may be made to the corresponding processes in the implementations of the above method for specific operating processes of the systems, modules and units described above, and the specific operating processes will not be repeated here.

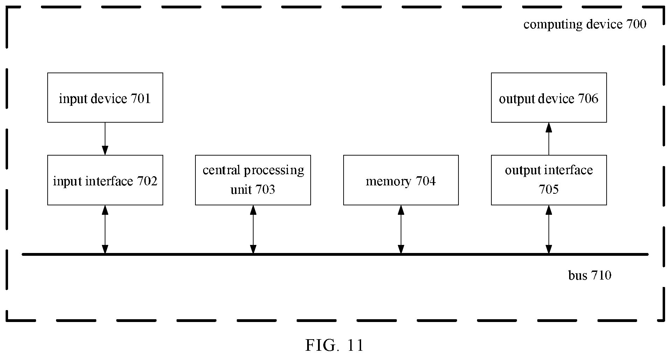

FIG. 11 is a schematic diagram illustrating exemplary hardware architecture of a computing device capable of implementing the signal transmission method according to the present disclosure.

As shown in FIG. 11, a computing device 700 includes an input device 701, an input interface 702, a central processing unit 703, a memory 704, an output interface 705, and an output device 706. The input interface 702, the central processing unit 703, the memory 704, and the output interface 705 are connected to each other via a bus 710, and the input device 701 and the output device 706 are connected to the bus 710 via the input interface 702 and the output interface 705, respectively, so as to be further connected to the other components of the computing device 700.

Exemplarily, the input device 701 receives input information from the outside, and transmits the input information to the central processing unit 703 via the input interface 702; the central processing unit 703 processes the input information based on computer-executable instructions stored in the memory 704 to generate output information, stores the output information temporarily or permanently in the memory 704, and then transmits the output information to the output device 706 via the output interface 705; and the output device 706 outputs the output information outside the computing device 700 for a user to use.

In an implementation, the computing device shown in FIG. 11 may be implemented as a network device, which may include: a memory configured to store a program; and a processor configured to run the program stored in the memory to perform the signal transmission method described herein.

The above description is only of the exemplary implementations of the present disclosure, and is not intended to limit the scope of the present disclosure. In general, the various implementations of the present disclosure may be implemented by hardware or special circuits, software, logic or any combination thereof. For example, some aspects of the present disclosure may be implemented by hardware and other aspects may be implemented by firmware or software executable by a controller, a microprocessor or other computing devices, but the present disclosure is not limited thereto.

The implementations of the present disclosure may be implemented by a data processor of a mobile device executing computer program instructions. For example, the implementations of the present disclosure are implemented in a processor entity, or by hardware, or by a combination of software and hardware. The computer program instructions may be assembly instructions, Instruction Set Architecture (ISA) instructions, machine instructions, machine-related instructions, microcode, firmware instructions, state setting data, or source code or object code written in one programming language or in any combination of a plurality of programming languages.

A block diagram illustrating any logic flow in the drawings of the present disclosure may show operations of a program, or interconnected logic circuits, modules and functions, or a combination of the operations of the program and the logic circuits, modules and functions. The computer program can be stored on a memory. The memory may be of any type suitable to local technical environment and may be implemented using any suitable data storage technology. For example, the memory is, but not limited to, a Read-Only Memory (ROM), a Random Access Memory (RAM), and an optical storage device and system (a Digital Video Disc (DVD) or a Compact Disc (CD)). A computer-readable medium may include a non-transitory storage medium. The data processor may be of any type suitable to the local technical environment. For example, the data processor is, but not limited to, a general-purpose computer, a special purpose computer, a microprocessor, a Digital Signal Processors (DSP), an Application Specific Integrated Circuit (ASIC), an FGPA and a processor based on multi-core architecture.

The exemplary implementations of the present disclosure are illustrated in detail above by exemplary and non-limiting examples. For those of ordinary skill in the art, various modifications and adjustments to the above implementations can be obviously derived from the accompanying drawings and the appended claims, but those modifications and adjustments are not beyond the scope of the present disclosure. Therefore, the proper scope of the present disclosure is defined by the appended claims.

## Claims

1. A signal transmission method, comprising:
modulating a predetermined digital signal into an analog signal within a predetermined frequency range;
combining the analog signal obtained by modulation and a radio frequency signal which needs to be transmitted to obtain a combined analog signal;
transmitting, by a signal transmitter, a corresponding optical signal obtained through electrical-optical conversion of the combined analog signal, and receiving, by a signal receiver, a corresponding analog signal obtained through optical-electrical conversion of the corresponding optical signal;
extracting an analog signal and a radio frequency signal from the analog signal obtained by the conversion; and
demodulating the extracted analog signal into a digital signal for transmission of the digital signal obtained by demodulation.

2. The method of claim 1, wherein combining the analog signal obtained by the modulation and the radio frequency signal which needs to be transmitted to obtain the combined analog signal comprises:
performing a first filtering processing on the analog signal obtained by the modulation and the radio frequency signal which needs to be transmitted; and
performing a combination processing on the analog signal and the radio frequency signal which are subjected to the first filtering processing, so as to obtain the combined analog signal.

3. The method of claim 1, wherein demodulating the extracted analog signal into the digital signal comprises:
performing a second filtering processing on the extracted analog signal; and
demodulating the analog signal subjected to the second filtering processing into the digital signal.

4. The method of claim 1, wherein modulating the predetermined digital signal into the analog signal within the predetermined frequency range comprises: modulating the digital signal into the analog signal within the predetermined frequency range using a first clock signal, the first clock signal being a carrier signal generated in advance for signal modulation.

5. The method of claim 4, wherein, in a case where the predetermined digital signal is a digital signal of a transmission channel, each of the combined analog signal and signals extracted from the analog signal obtained by the conversion comprises: a second clock signal;
combining the analog signal obtained by the modulation and the radio frequency signal which needs to be transmitted to obtain the combined analog signal comprises: combining the second clock signal generated in advance, the analog signal obtained by the modulation and the radio frequency signal which needs to be transmitted to obtain the combined analog signal, with the second clock signal and the first clock signal being clock signals generated by a same clock generator and having different frequencies; and
extracting the analog signal and the radio frequency signal from the analog signal obtained by the conversion comprises: extracting the second clock signal, the analog signal, and the radio frequency signal from the analog signal obtained by the conversion.

6. The method of claim 5, wherein combining the second clock signal generated in advance, the analog signal obtained by the modulation and the radio frequency signal which needs to be transmitted to obtain the combined analog signal comprises:
performing a first filtering processing on the second clock signal, the analog signal obtained by the modulation and the radio frequency signal which needs to be transmitted, and then combining the second clock signal, the analog signal and the radio frequency signal which are subjected to the first filtering processing, so as to obtain the combined analog signal.

7. The method of claim 5, after extracting the second clock signal, the analog signal, and the radio frequency signal from the analog signal obtained by the conversion, further comprising:
mixing the extracted second clock signal and the extracted radio frequency signal to perform an up conversion processing on the extracted radio frequency signal, so as to obtain a corresponding radio signal;
performing a signal amplification processing on the radio signal; and
transmitting the radio signal subjected to the signal amplification processing.

8. The method of claim 7, wherein mixing the extracted second clock signal and the extracted radio frequency signal to perform the up conversion processing on the extracted radio frequency signal, so as to obtain the corresponding radio signal comprises:
performing a second filtering processing on the extracted second clock signal and the extracted radio frequency signal; and
mixing the second clock signal subjected to the second filtering processing and the radio frequency signal subjected to the second filtering processing to obtain the corresponding radio signal.

9. The method of any one of claims 1 to 4, wherein, in a case where the predetermined digital signal is a digital signal of a receiving channel, before combining the analog signal obtained by the modulation and the radio frequency signal which needs to be transmitted to obtain the combined analog signal, the method further comprises:
performing signal amplification processing on a radio signal received through an antenna to obtain the radio signal subjected to the signal amplification processing; and
mixing the radio signal subjected to the signal amplification processing and a second clock signal generated in advance to perform a down conversion processing on the radio signal subjected to the signal amplification processing, so as to obtain the radio frequency signal which needs to be transmitted.

10. The method of any one of claims 1 to 4, wherein, in a case where the predetermined digital signal is a digital signal of a receiving channel, after extracting the analog signal and the radio frequency signal from the analog signal obtained by conversion, the method further comprises:
performing a second filtering processing on the extracted radio frequency signal; and
performing a digital sampling on the radio frequency signal subjected to the second filtering processing to obtain the digitally sampled radio frequency signal.

11. The method of any one of claims 1 to 4, wherein, in a case where the predetermined digital signal is a digital signal of a receiving channel, after demodulating the extracted analog signal into the digital signal, the method further comprises:
performing a logical processing on the digital signal obtained by demodulation to obtain the logically processed digital signal.

12. A signal transmission system, comprising:
a modulator configured to modulate a predetermined digital signal into an analog signal within a predetermined frequency range;
a first combiner configured to combine the analog signal obtained by modulation with a radio frequency signal which needs to be transmitted, so as to obtain a combined analog signal;
a signal transmitter configured to transmit a corresponding optical signal obtained through electrical-optical conversion of the combined analog signal;
a signal receiver configured to receive a corresponding analog signal obtained through optical-electrical conversion of the corresponding optical signal;
a second combiner configured to extract an analog signal and a radio frequency signal from the analog signal obtained by the conversion; and
a demodulator configured to demodulate the extracted analog signal into a digital signal for transmission of the digital signal obtained by demodulation.

13. The system of claim 12, further comprising:
a first filter configured to perform a first filtering processing on the analog signal obtained by the modulation and the radio frequency signal which needs to be transmitted; and
the first combiner further configured to combine the analog signal and the radio frequency signal which are subjected to the first filtering processing to obtain the combined analog signal.

14. The system of claim 12, further comprising:
a second filter configured to perform a second filtering processing on the extracted analog signal; and
the demodulator configured to demodulate the analog signal subjected to the second filtering processing into the digital signal.

15. The system of claim 12, further comprising:
a clock generator configured to generate a first clock signal, the first clock signal being a carrier signal for signal modulation; and
the modulator further configured to modulate the digital signal into the analog signal within the predetermined frequency range using the generated first clock signal.

16. The system of claim 15, wherein, in a case where the predetermined digital signal is a digital signal of a transmission channel, the system further comprises:
the clock generator further configured to generate a second clock signal, with the second clock signal and the first clock signal being clock signals generated by the same clock generator and having different frequencies;
the first combiner further configured to combine the second clock signal generated in advance, the analog signal obtained by the modulation, and the radio frequency signal which needs to be transmitted, so as to obtain the combined analog signal; and
the second combiner further configured to extract the second clock signal, the analog signal, and the radio frequency signal from the analog signal obtained by the conversion.

17. The system of claim 16, further comprising:
a second filter configured to perform a first filtering processing on the second clock signal, the analog signal obtained by the modulation, and the radio frequency signal which needs to be transmitted; and
the first combiner further configured to combine the second clock signal, the analog signal, and the radio frequency signal which are subjected to the first filtering processing, so as to obtain the combined analog signal.

18. The system of claim 16, further comprising:
a mixer configured to mix the extracted second clock signal and the extracted radio frequency signal to perform an up conversion processing on the extracted radio frequency signal, so as to obtain a corresponding radio signal;
a signal amplifier configured to perform a signal amplification processing on the radio signal; and
an antenna configured to transmit the radio signal subjected to the signal amplification processing.

19. The system of claim 18, further comprising:
the second filter configured to perform a second filtering processing on the extracted second clock signal and the extracted radio frequency signal; and
the mixer further configured to mix the second clock signal and the radio frequency signal which are subjected to the second filtering processing, so as to obtain the corresponding radio signal.

20. The system of any one of claims 12 to 15, wherein in a case where the predetermined digital signal is a digital signal of a receiving channel, the system further comprises:
a signal amplifier configured to perform signal amplification processing on a radio signal received through an antenna, so as to obtain the radio signal subjected to the signal amplification processing; and
a mixer configured to mix the radio signal subjected to the signal amplification processing with a second clock signal generated in advance to perform a down conversion processing on the radio signal subjected to the signal amplification processing, so as to obtain the radio frequency signal which needs to be transmitted.

21. The system of any one of claims 12 to 15, wherein in a case where the predetermined digital signal is a digital signal of a receiving channel, the system further comprises:
the second filter configured to perform a second filtering processing on the extracted radio frequency signal; and
an analog-to-digital converter configured to perform a digital sampling on the radio frequency signal subjected to the second filtering processing, so as to obtain the digitally sampled radio frequency signal.

22. The system of any one of claims 12 to 15, wherein, in a case where the predetermined digital signal is a digital signal of a receiving channel, the system further comprises:
a control unit configured to perform a logical processing on the digital signal obtained by demodulation to obtain the logically processed digital signal.
